# EUROPEAN PATENT APPLICATION

(11) **EP 3 915 427 A1**
(43) Date of publication of application: **01.12.2021**
(21) Application number: 20187333.8
(22) Date of filing: 23.07.2020
(51) Int. Cl.: A44B 18/00, G06F 1/16

(54) **FASTENING STRAP, METHOD AND MOLDING DEVICE FOR MANUFACTURING THE SAME**

(30) Priority: 25.05.2020 US 202016882558
(71) Applicant: XRSpace CO., LTD., Taoyuan City 330 (TW)
(72) Inventor: LIN, Yen-Hung, 330 Taoyuan City (TW); WANG, Chieh-Kai, 500 Changhua City, Changhua County (TW)
(74) Representative: Wimmer, Hubert

(57) **Abstract**

A fastening strap (200, 200-1, 200-2, 200-3, 200-4, 200-5), a method, and a molding device for manufacturing the same are provided. The fastening strap (200, 200-1, 200-2, 200-3, 200-4, 200-5) includes, but not limited to, an elastic webbing band (250), a loop fastener (210, 210-1, 210-2, 210-3, 210-4, 210-5), and a hook fastener (230). The loop fastener (210, 210-1, 210-2, 210-3, 210-4, 210-5) includes a loop part (211, 211-1, 211-2, 211-4) and a hollowed part (213, 213-2). The loop part (211, 211-1, 211-2, 211-4) has a backside (211-1a) attached to the elastic webbing band (250). The hollowed part (213, 213-2) penetrates through the loop part (211, 211-1, 211-2, 211-4). The hook fastener (230) is accommodated in the hollowed part (213, 213-2) of the loop fastener (210, 210-1, 210-2, 210-3, 210-4, 210-5) and has a backside (230a) attached to the elastic webbing band (250). Accordingly, the thickness of the fastening strap (200, 200-1, 200-2, 200-3, 200-4, 200-5) would be reduced, and it is easier for the user to make the fastening strap (200, 200-1, 200-2, 200-3, 200-4, 200-5) pass through a ring or a channel.

## Description

### TECHNICAL FIELD

The present disclosure generally relates to a fastener, in particular, to a fastening strap, a method, and a molding device for manufacturing the same.

### BACKGROUND

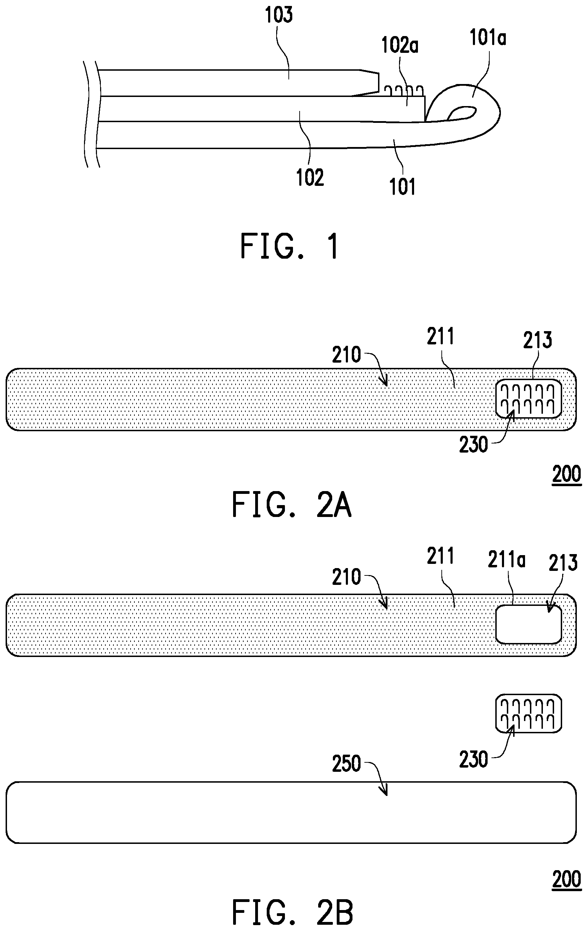

Head-mounted display (HMD) is a common product to achieve reality simulation. The HMD is wearable on the user's head. In general, the main body of the HMD may be connected with one or more straps to be worn on the user's head. The strap may include an elastic webbing band and a hook-and-loop fastener to adjust the length of the strap, so that the user may feel comfortable while wearing the HMD. FIG. 1 is a schematic diagram illustrating a conventional design of a strap 10. Referring to FIG.1, one end 101a of the elastic webbing band 101 may be folded to form a hem, and the hook part 102 and the loop part 103 of the hook-and-loop fastener and the elastic webbing band may be stacked. One end 102a of the hook part 102 is exposed for engaging with the loop part 103. However, the end of the strap 10 may be thick, and it is hard to pass through a ring or a channel on the main body of the HMD to assemble the same.

### SUMMARY OF THE DISCLOSURE

Accordingly, the present disclosure is directed to a fastening strap, a method, and a molding device for manufacturing the same, and a part of the loop part is hollowed to accommodate the hook part, so that the thickness of the whole strap may be reduced.

In one of the exemplary embodiments, a fastening strap includes, but not limited to, an elastic webbing band, a loop fastener, and a hook fastener. The loop fastener includes a loop part and a hollowed part. The loop part has a backside attached to the elastic webbing band. The hollowed part penetrates through the loop part. The hook fastener is accommodated in the hollowed part of the loop fastener and has a backside attached to the elastic webbing band.

In one of the exemplary embodiments, a method for manufacturing a fastening strap include, but not limited to, the following steps. An elastic webbing band and a loop fastener are provided. A part of the loop fastener is cut out to form a hollowed part penetrating through a main body of the loop fastener. A hook fastener is placed into the hollowed part of the loop fastener. The loop fastener and the hook fastener are attached to the elastic webbing band.

In one of the exemplary embodiments, a molding device for manufacturing a fastening strap according to the said method.

In light of the foregoing, according to the fastening strap, the method, and the molding device for manufacturing the same, the loop fastener includes a hollowed part formed by cutting out a part of the loop part, and the hook fastener could be accommodated in the hollowed part. Therefore, the thickness of the hook-and-loop fastener would be reduced, and it is easier for the user to assemble the fastening strap with another component such as a HMD or a mask.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram illustrating a conventional design of a strap.
FIG. 2A is a top view of a fastening strap according to one of the exemplary embodiments of the disclosure.
FIG. 2B respectively illustrates a top view of component parts of the fastening strap according to one of the exemplary embodiments of the disclosure.
FIG. 2C is a sectional view of the fastening strap according to one of the exemplary embodiments of the disclosure.
FIG. 2D is a sectional view of a fastening strap according to one of the exemplary embodiments of the disclosure.
FIG. 3A is a sectional view of a fastening strap according to one of the exemplary embodiments of the disclosure.
FIG. 3B is a sectional view of a fastening strap according to one of the exemplary embodiments of the disclosure.
FIG. 4 is a schematic diagram illustrating a head-mounted display (HMD) system.
FIG. 5A is a top view of a fastening strap having multiple extra hook fasteners according to one of the exemplary embodiments of the disclosure.
FIG. 5B is a top view of a fastening strap having multiple extra hook fasteners according to one of the exemplary embodiments of the disclosure.
FIG. 6 is a flowchart illustrating a method for manufacturing the fastening strap according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

FIG. 2A is a top view of a fastening strap 200 according to one of the exemplary embodiments of the disclosure. FIG. 2B respectively illustrates a top view of component parts of the fastening strap 200 according to one of the exemplary embodiments of the disclosure. Referring to FIG. 2A and FIG. 2B, the fastening strap 200 includes, but not limited to, a loop fastener 210, a hook fastener 230, and an elastic webbing band 250.

The loop fastener 210 includes a loop part 211 and a hollowed part 213. The loop part 210 is the main body of the loop fastener 210. In one embodiment, the shape of the loop part 211 could be a strip shape as illustrated in the drawings. In other embodiments, the shape of the loop part 211 could be any other shapes based on the design requirement. The loop part 210 includes loop material having multiple loops disposed thereon.

The hollowed part 213 penetrates through the loop part 211 in which an opening 211a of the loop part 211 forms the hollowed part 213. In one embodiment, the hollowed part 213 is located closer to one end of the loop part 211 (which is located at the right side of the drawing) relative to another end of the loop part 211 (which is located at the left side of the drawing). In other embodiments, the hollowed part 213 could be located any other locations of the loop part 211 based on the design requirement.

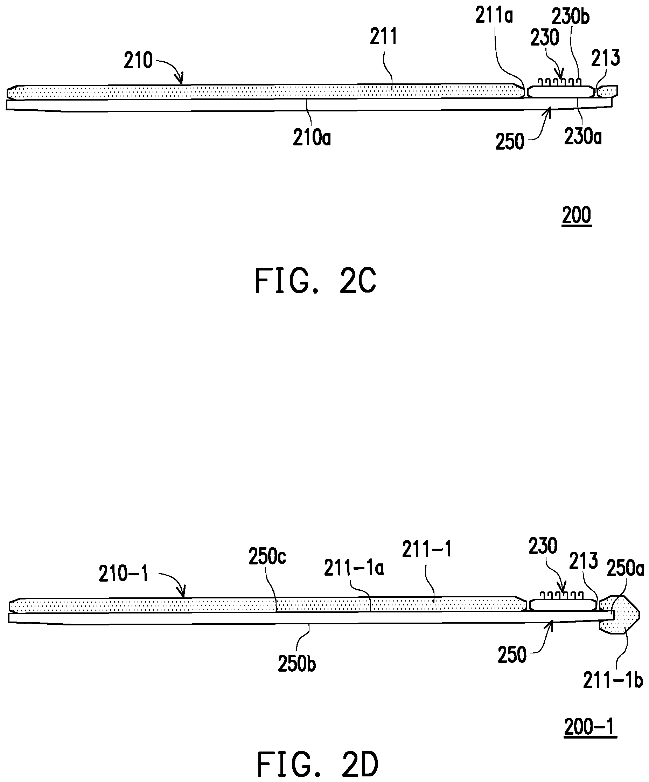

FIG. 2C is a sectional view of the fastening strap 200 according to one of the exemplary embodiments of the disclosure. Referring to FIG. 2A, FIG. 2B, and FIG. 2C, the hook fastener 230 is accommodated in the hollowed part 213 of the loop fastener 210. The backside 230a of the hook fastener 230 may be flush with the backside 210a of the look fastener 210. The frontside 230b of the hook fastener 230 includes hook material having multiple hooks disposed thereon and engageable with the loop part 211 of the loop fastener 210. Comparing FIG. 2C with FIG. 1, the thickness of both the loop fastener 210 and the hook fastener 230 is thinner than the thickness of the hook part 102 and the loop part 103.

In one embodiment, the shape of the hook fastener 230 approximates to the shape of the hollowed part 213 as illustrated in the drawings. It should be noted that the shapes of the hook fastener 230 and the hollowed part 213 could be modified based on the design requirement. In one embodiment, there may be a gap between the edge of the hook fastener 230 and the opening 211a of the loop part 211. In another embodiment, the edge of the hook fastener 230 may be abutted against the edge of the opening 211a.

The elastic webbing band 250 is located at the backside 210a of the loop fastener 210 and the backside 230a of the hook fastener 230. In other words, the backside 210a of the loop fastener 210 and the backside 230a of the hook fastener 230 are attached to the elastic webbing band 250. The elastic webbing band 250 includes elastic string material such as polyester, cotton, nylon, etc. In this embodiment, the loop fastener 210 and the hook fastener 230 are directly attached to the elastic webbing band 250, and the loop fastener 210 is not overlapped with the hook fastener 230. In one embodiment, the loop fastener 210 and the hook fastener 230 may be stitched on the elastic webbing band 250. In some embodiments, the loop fastener 210 and the hook fastener 230 may be attached with the elastic webbing band 250 by adhesive. In addition, referring to FIG. 2B, the outer shape of the elastic webbing band 250 approximates to the outer shape of the loop fastener 210. For example, the outer shape is the strip shape. Two ends of the elastic webbing band 250 may be flush with corresponding two ends of the loop fastener 210, respectively. However, in some embodiments, the shapes of the elastic webbing band 250 and the loop fastener 210 may be different.

FIG. 2D is a sectional view of a fastening strap 200-1 according to one of the exemplary embodiments of the disclosure. Referring to FIG. 2D, the difference between the fastening strap 200-1 and the fastening strap 200 is that hem may be formed in which the end 211-1b of the loop part 211-1 is further extended outside from the end 250a of the elastic webbing band 250 and folded back to attach to the backside 250b of the elastic webbing band 250. In addition, the ends of the loop fastener 210-1 could be stitched with the elastic webbing band 250. On the other hand, the backside 211-la of the loop part 211-1 is attached to the frontside 250c of the elastic webbing band 250. Therefore, the end of the elastic webbing band 250 could be overlaid by the loop fastener 210. Comparing FIG. 2D with FIG. 1, the thickness of the hem of the fastening strap 200-1 is thinner than the thickness of the hem of the strap 10.

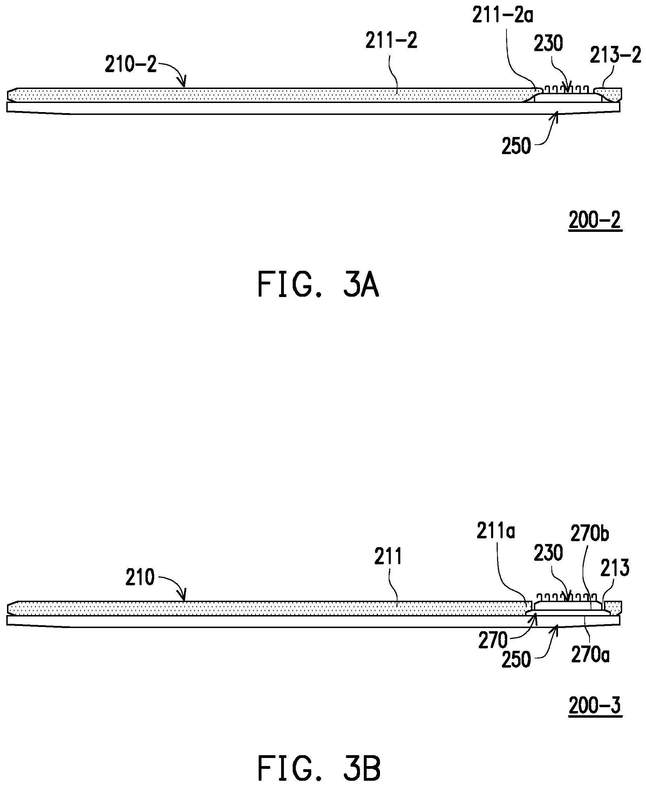

In addition, there are multiple manners to combine the loop fastener 210, the hook fastener 230, and the elastic webbing band 250. FIG. 3A is a sectional view of a fastening strap 200-2 according to one of the exemplary embodiments of the disclosure. Referring to FIG. 3A, the difference between the fastening strap 200-2 and the fastening strap 200 is that the edge of the opening 211-2a of the loop part 211-2 is overlaid on the hook fastener 230. The size of the hollowed part 213-2 of the loop fastener 230 may be slightly less than the size of the hook fastener 230. In one embodiment, the edge of the opening 211-2a of the loop part 211-2 may be directly stitched with the hook fastener 230 and the elastic webbing band 250. In some embodiments, these components may be combined by adhesive or other attaching manners.

FIG. 3B is a sectional view of a fastening strap according to one of the exemplary embodiments of the disclosure. Referring to FIG. 3B, the difference between the fastening strap 200-3 and the fastening strap 200 is that the fastening strap 200-3 further includes a combining member 270. The loop fastener 210-3 and the hook fastener 230 are directly attached to the frontside 270b of the combining member 270, and the backside 270a of the combining member 270 is directly attached to the elastic webbing band 250. The size of the hollowed part 213-2 of the loop fastener 230 may be slightly less than the size of the combining member 270, and the hook fastener 230 is completely overlaid on the combining member 270. The combining member 270 may include any fabric material such as cotton, nylon, silk, etc. In one embodiment, the edge of the opening 211a of the loop part 211-2 may be directly stitched with the combining member 270, the hook fastener 230 may be directly stitched with the combining member 270, and the combining member 270 may be directly stitched with the elastic webbing band 250. In some embodiments, these components may be combined by adhesive or other attaching manners.

Because the thicknesses of the fastening straps 200-200-3 are thinner than the conventional design such as strap 10 of FIG. 1, it is easier to pass through a ring or a channel and further combine with another component.

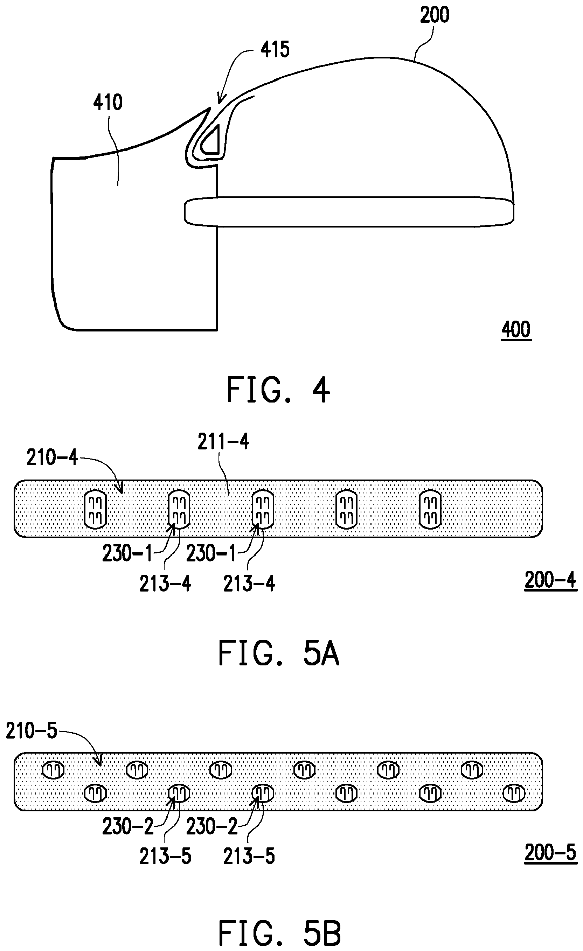

FIG. 4 is a schematic diagram illustrating a head-mounted display (HMD) system 400. Referring to FIG. 2A and FIG. 4, taking the fastening straps 200 of FIG. 2A as an example, the main body 410 of the HMD system 400 is wearable on a user's head. It is easier for the end of the fastening straps 200 to pass through a channel 415 of the main body 410, so as to assemble with main body 410. One end of the fastening strap 200 could be folded back, so that the loop fastener 210 could be attached with the hook fastener 230. The location where the loop fastener 210 is attached with the hook fastener 230 could be adjusted to fit for different users' heads. In some embodiments, the fastening straps 200-200-3 may be adapted for another component such as a gas mask, a retaining ring, etc.

FIG. 5A is a top view of a fastening strap 200-4 having multiple extra hook fasteners 103-1 according to one of the exemplary embodiments of the disclosure. Referring to FIG. 5A, the difference between the fastening strap 200-4 and the fastening strap 200 is that the fastening strap 200-4 further includes extra hook fasteners 230-1. In addition, the loop fastener 210-4 may further include extra hollowed part 213-4 to accommodate the corresponding extra hook fasteners 230-1, respectively. Similarly, the extra hollowed part 213-4 penetrates through the loop part 211-4 of the loop fastener 210-4. The shape of each extra hook fasteners 103-1 approximates to the shape of the corresponding extra hollowed part 213-4. The backside of the extra hook fasteners 103-1 attached to the elastic webbing band 150 (not shown).

FIG. 5B is a top view of a fastening strap 200-5 having multiple extra hook fasteners 230-2 according to one of the exemplary embodiments of the disclosure. Referring to FIG. 5B, similarly, the extra hook fasteners 230-2 are respectively accommodated in the corresponding extra hollowed part 213-5 of the loop fastener 210-5. The location and the number of the extra hook fasteners 230-2 may be modified. Therefore, when the end of the fastening straps 200-4 or 200-5 is folded back, more areas of the loop fastener 210-4 or 210-5 could be engaged with the extra hook fasteners 230-1 or 230-2 without increasing the thickness of the whole body.

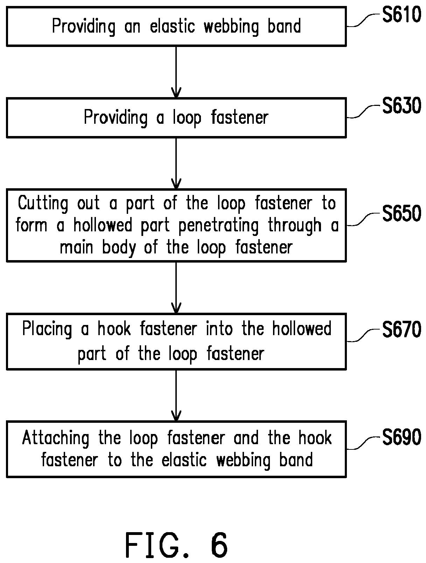

In another aspect, FIG. 6 is a flowchart illustrating a method for manufacturing the fastening strap 200-200-5 according to one of the exemplary embodiments of the disclosure. Referring to FIG. 6, the method may include providing the elastic webbing band 250 (step S610), providing the loop fastener 210, 210-1, 210-2, 210-4, or 210-5 (step S630), cutting out a part of the loop fastener 210, 210-1, 210-2, 210-4, or 210-5 to form the hollowed part 213 or 213-2 penetrating through a main body of the loop fastener 210, 210-1, 210-2, 210-4, or 210-5 (step S650), placing the hook fastener 230 into the hollowed part 213 or 213-2 of the loop fastener 210, 210-1, 210-2, 210-4, or 210-5 (step S670), and attaching the loop fastener 210, 210-1, 210-2, 210-4, or 210-5 and the hook fastener 230 to the elastic webbing band 250 (step S690).

In step S650, in one embodiment, the cut part of the loop fastener 210, 210-1, 210-2, 210-4, or 210-5 may have a shape approximating to the shape of the hook fastener 230, so that the shape of the hook fastener 230 may also approximate to the shape of the hollowed part 213 or 213-2. In some embodiments, the cut part of the loop fastener 210, 210-1, 210-2, 210-4, or 210-5 may have any shape based on the design requirement. In step S690, these components may be stitched and/or adhered together.

In one embodiment, the method for manufacturing the fastening strap 200-1 further includes folding the end 211-1b of the loop fastener 210-1 back to overlay the frontside 250c and a part of the backside 250b of the elastic webbing band 250, and stitching the end 211-1b of the hook fastener 210-1 with the elastic webbing band 250, to form a hem. In another embodiment, the end 211-lb of the hook fastener 210-1 may adhere to the elastic webbing band 250.

In another aspect, a molding device could be a combination of a tailoring machine, a cutting machine, and an automatic mechanism (such as a mechanical arm, a height adjustment table, a slide rail, a rotating table, a screw rod, a motor, a cylinder or various types of combination of mechanical components that may drive connecting components to move or rotate, so that the placed device under test may lift, lower, move, and/or rotate). The molding device of the embodiment is configured to perform the aforementioned method for manufacturing the fastening strap 200-200-5. For example, the cutting part of the molding device cuts out a part of the loop fastener 210, 210-1, 210-2, 210-4, or 210-5 to form the hollowed part 213 or 213-2 penetrating through a main body of the loop fastener 210, 210-1, 210-2, 210-4, or 210-5. The tailoring part of the molding device attaches the loop fastener 210, 210-1, 210-2, 210-4, or 210-5 and the hook fastener 230 to the elastic webbing band 250. The automatic mechanism of the molding device places the hook fastener 230 into the hollowed part 213 or 213-2 of the loop fastener 210, 210-1, 210-2, 210-4, or 210-5.

In summary, the exemplary embodiments described above depicted fastening strap, method, and molding device for manufacturing the fastening strap, the hook fastener is accommodated in the hollowed part of the loop fastener, and the hem may be formed by folding the end of the loop fastener back and attaching with the elastic webbing band. In addition, multiple extra hook fasteners may be provided. Accordingly, the thickness of the fastening strap may be reduced, and it is easier to assemble the fastening strap with another component.

## Claims

1. A fastening strap (200, 200-1, 200-2, 200-3, 200-4, 200-5), **characterized by** comprising:
an elastic webbing band (250);
a loop fastener (210, 210-1, 210-2, 210-3, 210-4, 210-5), comprising:
a loop part (211, 211-1, 211-2, 211-4), having a backside (211-1a) attached to the elastic webbing band (250); and
a hollowed part (213, 213-2), penetrating through the loop part (211, 211-1, 211-2, 211-4); and
a hook fastener (230), accommodated in the hollowed part (213, 213-2) of the loop fastener (210, 210-1, 210-2, 210-3, 210-4, 210-5) and having a backside (230a) attached to the elastic webbing band (250).

2. The fastening strap (200, 200-1, 200-2, 200-3, 200-4, 200-5) of claim 1, **characterized in that** the backside (211-1a) of the loop part (211, 211-1, 211-2, 211-4) is attached to a frontside (250c) of the elastic webbing band (250), and an end (211-lb) of the loop fastener (210, 210-1, 210-2, 210-3, 210-4, 210-5) is extended outside from an end (250a) of the elastic webbing band (250) and folded back to attach to a backside (250b) of the elastic webbing band (250).

3. The fastening strap (200, 200-1, 200-2, 200-3, 200-4, 200-5) of claim 1, **characterized in that** an end (211-1b) of the loop fastener (210, 210-1, 210-2, 210-3, 210-4, 210-5) is flush with an end (250a) of the elastic webbing band (250).

4. The fastening strap (200, 200-1, 200-2, 200-3, 200-4, 200-5) of claim 1, **characterized in that** a shape of the hook fastener (230) approximates to a shape of the hollowed part (213, 213-2).

5. The fastening strap (200, 200-1, 200-2, 200-3, 200-4, 200-5) of claim 1, **characterized in that** the loop fastener (210, 210-1, 210-2, 210-3, 210-4, 210-5) and the hook fastener (230) are directly attached to the elastic webbing band (250), and the loop fastener (210, 210-1, 210-2, 210-3, 210-4, 210-5) is not overlapped with the hook fastener (230).

6. The fastening strap (200, 200-1, 200-2, 200-3, 200-4, 200-5) of claim 1, **characterized in that** the loop fastener (210, 210-1, 210-2, 210-3, 210-4, 210-5) and the hook fastener (230) are directly attached to the elastic webbing band (250), and an opening edge of the loop part (211, 211-1, 211-2, 211-4) is overlaid on the hook fastener (230).

7. The fastening strap (200, 200-1, 200-2, 200-3, 200-4, 200-5) of claim 1, **characterized by** further comprising:
a combining member (270), wherein the loop fastener (210, 210-1, 210-2, 210-3, 210-4, 210-5) and the hook fastener (230) are directly attached to a frontside (270b) of the combining member (270), and a backside (270a) of the combining member (270) is directly attached to the elastic webbing band (250).

8. The fastening strap (200, 200-1, 200-2, 200-3, 200-4, 200-5) of claim 1, **characterized in that** the loop fastener (210, 210-1, 210-2, 210-3, 210-4, 210-5) further comprising:
at least one extra hollowed part (213-4, 213-5), penetrating through the loop part (211, 211-1, 211-2, 211-4), wherein the fastening strap (200, 200-1, 200-2, 200-3, 200-4, 200-5) further comprises:
at least one extra hook fastener (230-1, 230-2), respectively accommodated in the at least one extra hollowed part (213-4, 213-5) of the loop fastener (210, 210-1, 210-2, 210-3, 210-4, 210-5) and having a backside attached to the elastic webbing band (250), wherein a shape of one of the at least one extra hook fastener (230-1, 230-2) approximates to a shape of a corresponding extra hollowed part (213-4, 213-5).

9. The fastening strap (200, 200-1, 200-2, 200-3, 200-4, 200-5) of claim 1, **characterized in that** an outer shape of the elastic webbing band (250) approximates to an outer shape of the loop fastener (210, 210-1, 210-2, 210-3, 210-4, 210-5).

10. The fastening strap (200, 200-1, 200-2, 200-3, 200-4, 200-5) of claim 1, **characterized by** being adapted for assembling with a head-mounted display (HMD) (400) wearable on a user's head, wherein an end of the fastening strap (200, 200-1, 200-2, 200-3, 200-4, 200-5) passes through a channel (415) of a main body (410) of the HMD (400), and the end of the fastening strap (200, 200-1, 200-2, 200-3, 200-4, 200-5) is folded back to attach the loop fastener (210, 210-1, 210-2, 210-3, 210-4, 210-5) with the hook fastener (230).

11. A method for manufacturing a fastening strap (200, 200-1, 200-2, 200-3, 200-4, 200-5), **characterized by** comprising:
providing an elastic webbing band (250);
providing a loop fastener (210, 210-1, 210-2, 210-3, 210-4, 210-5);
cutting out a part of the loop fastener (210, 210-1, 210-2, 210-3, 210-4, 210-5) to form a hollowed part (213, 213-2) penetrating through a main body of the loop fastener (210, 210-1, 210-2, 210-3, 210-4, 210-5);
placing a hook fastener (230) into the hollowed part (213, 213-2) of the loop fastener (210, 210-1, 210-2, 210-3, 210-4, 210-5); and
attaching the loop fastener (210, 210-1, 210-2, 210-3, 210-4, 210-5) and the hook fastener (230) to the elastic webbing band (250).

12. The method for manufacturing the fastening strap (200, 200-1, 200-2, 200-3, 200-4, 200-5) of claim 11, **characterized by** further comprising:
folding an end (211-lb) of the loop fastener (210, 210-1, 210-2, 210-3, 210-4, 210-5) back to overlay a frontside (250c) and a part of a backside (250b) of the elastic webbing band (250); and
stitching the end of the hook fastener (230) with the elastic webbing band (250).

13. The method for manufacturing the fastening strap (200, 200-1, 200-2, 200-3, 200-4, 200-5) of claim 11, **characterized in that** a shape of the hook fastener (230) approximates to a shape of the hollowed part (213, 213-2).

14. A molding device for manufacturing a fastening strap (200, 200-1, 200-2, 200-3, 200-4, 200-5), **characterized in that** the molding device is configured to perform the method of claims 11, 12, or 13.
